# EUROPÄISCHE PATENTANMELDUNG

(11) **EP 0 704 274 A1**
(43) Veröffentlichungstag der Anmeldung: **03.04.1996**
(21) Anmeldenummer: 95115181.0
(22) Anmeldetag: 27.09.1995
(51) Int. Cl.: B23P 15/30, B23B 27/16

(54) **Hartmetallplatten, insbesondere Schneidplatten, mit Präzisionsbohrungen**

(30) Priorität: 30.09.1994 DE 4435173; 22.04.1995 DE 29506825 U
(71) Anmelder: TIGRA Hartstoff GmbH, D-86405 Meitingen (DE)
(72) Erfinder: Feld, Harald, Dr., D-86678 Ehingen (DE)
(74) Vertreter: Gallo, Wolfgang, Dipl.-Ing. (FH)

(57) **Zusammenfassung**

Eine Präzisionsbohrung (2) in einer Hartmetallplatte (1) wird durch Formen einer größeren Rohbohrung (11a) in der Hartmetallplatte, Einbringen eines leicht bohrbaren Materials (4) in die Rohbohrung, und Bohren der Präzisionsbohrung in dem bohrbaren Material hergestellt.

## Beschreibung

Diue Erfindung betrifft eine Hartmetallplatte mit mindestens einer darin hergestellten Präzisionsbohrung.

Als Anwendungsgebiet der Erfindung kommen insbesondere Schneidplatten aus Hartmetall in Betracht, wie sie in Messerköpfen zum Profilfräsen und dgl. benützt werden, wobei in der Hartmetallplatte gebildete Präzisionsbohrungen im Zusammenwirken mit Paßstiften oder dgl. zur Präzisionspositionierung der Schneidplatte im Messerkopf bzw. in der in den Messerkopf einzusetzenden Schneidplattenhalterung dienen können.

Bohrungen in Hartmetall können nach dem gegenwärtigen Stand der Technik dadurch hergestellt werden, daß sie im rohen Sinterkörper eingepreßt oder im vorgesinterten Zustand eingebohrt werden. Die so hergestellten Bohrungen unterliegen aber während des Sinterprozesses einem Schwundvorgang und sind daher im Durchmesser und auch hinsichtlich der gegenseitigen Abstände zweier oder mehrerer Bohrungen zueinander oder von Bezugskanten und bei Nennmaßen über etwa 20 mm mit einer Toleranz von ca. 1 % herstellbar. Kleine Präzisionsbohrungen, wie sie zur Aufnahme von Paßzapfen zur Präzisionspositionierung von Schneidplatten erforderlich sind, können auf diese Weise natürlich nicht hergestellt werden.

Genauere Bohrungen können in Hartmetallplatten entweder durch nachträgliches Schleifen erzeugt werden, was bei Bohrungen in flachen Platten nur mit sehr aufwendigen Schleifverfahren durchgeführt werden kann, oder es können Bohrungen durch Erodierverfahren oder Ultraschallbohren erzeugt werden, was aber wiederum keine hinreichende Präzision ermöglicht und ebenfalls kostenmäßig aufwendig ist.

Der Erfindung liegt daher die Aufgabe zugrunde, Hartmetallplatten mit einfacher und billiger herzustellender Präzisionsbohrungen zu schaffen.

Diese Aufgabe wird gemäß der Erfindung durch die in den Ansprüchen angegebene Hartmetallplatte gelöst.

Einige Ausführungsbeispiele der Erfindung sind in den anliegenden Zeichnungen dargestellt und werden im folgenden näher beschrieben. In den Zeichnungen zeigt:
- Fig. 1: Ein Ausführungsbeispiel einer erfindungsgemäßen Hartmetallplatte in Ansicht,
- Fig. 2: einen vergrößerten ausschnittweisen Längsschnitt längs der Linie 2-2 in Fig. 1,
- Fig. 3: in vergrößertem ausschnittweisem Längsschnitt ähnlich Fig. 2 eine weitere Ausführungsform der Erfindung, und
- Fig. 4: ebenfalls in vergrößertem ausschnittweisem Längsschnitt eine noch weitere Ausführungsform der Erfindung.

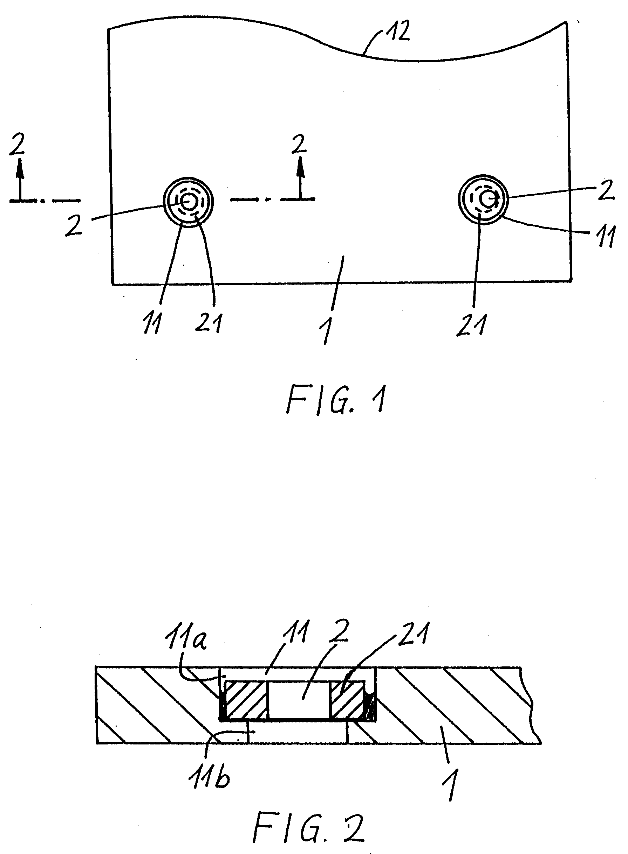

Fig. 1 zeigt eine als Schneidplatte zur Verwendung in einem Messerkopf ausgebildete Hartmetallplatte 1 mit zwei darin hergestellten Präzisionsbohrungen 2, die zur Aufnahme von Paßzapfen zur Präzisionspositionierung der Schneidplatte im Schneidplattenhalter des Messerkopfes dienen.

Wie Fig. 2 zeigt, ist jede der beiden Präzisionsbohrungen 2 dadurch hergestellt, daß im Hartmetallplattenkörper eine Stufenbohrung 11 eingeformt ist, in welche ein Plättchen 21 eingesetzt ist, in welchem die Präzisionsbohrung 2 hergestellt ist.

Die Stufenbohrung 11 besteht aus einem im Durchmesser größeren Abschnitt 11a, der sich durch einen wesentlichen Teil der Hartmetalldicke erstreckt, und aus einem im Durchmesser kleineren Abschnitt 11b, dessen Durchmesser aber größer als die Präzisionsbohrung 2 ist. Das Plättchen 21 ist in den im Durchmesser größeren Teil 11a der Stufenbohrung 11 eingesetzt, so daß es mit seiner Unterseite auf dem Absatz der Stufenbohrung aufliegt. Das Plättchen 21 kann aus einem bohrbarem Metall bestehen und in die Stufenbohrung eingelötet, eingeschweißt oder auf andere Weise metallurgisch mit dem Hartmetall der Hartmetallplatte 1 verbunden sein, oder das Plättchen 21 kann auch aus Kunststoff oder einem kunststoffgebundenen Kompositwerkstoff bestehen und in die Stufenbohrung eingeklebt sein. Das Einkleben ist auch bei einem aus Metall bestehenden Plättchen 21 möglich.

Die Herstellung erfolgt folgendermaßen: In die Hartmetallplatte 1 wird im Zuge von deren Herstellung jeweils zunächst die Stufenbohrung 11 eingebracht, indem sie im Sinterrohling eingepreßt oder im vorgesinterten Zustand eingebohrt wird. Nach dem Sintern der Hartmetallplatte wird das Plättchen 21 aus Metall oder Kunststoff eingelötet oder eingeklebt, und anschließend kann in dieses nun auf einem Koordinatenbohrwerk die Bohrung 2 mit höchster Genauigkeit eingebracht werden.

Dieses Verfahren ermöglicht gegenüber den bisherigen Methoden eine wesentlich kostengünstigere Erzeugung von Präzisionsbohrungen in Hartmetallplatten, ohne die Funktion der Hartmetallplatte in irgendeiner Weise zu beeinträchtigen, denn deren Ausbildung als Hartmetall ist ja nur im Bereich der Schneide 12 funktionsnotwendig.

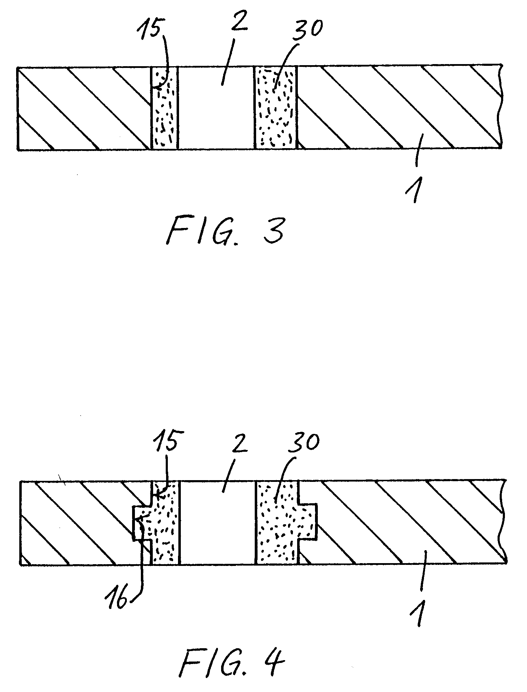

Bei der in Fig. 3 dargestellten Ausführungsform ist eine in der Hartmetallplatte 1 hergestellte grobe Öffnung 15 mit Kunstharz 30 eingegossen, in welchen dann die Präzisionsbohrung 2 in präziser Position und mit präzisem Durchmesser eingebracht wird.

Alternativ dazu, was jedoch nicht gesondert dargestellt ist, kann statt des Ausgießens der Rohbohrung 15 in der Hartmetallplatte 1 mit einem Kunstharz ein Kunststoffring oder eine Kunststoffscheibe eingepreßt werden, in welchem dann die Präzisionsbohrung 2 hergestellt bzw. aufgebohrt wird.

Eine noch weitere Ausführungsform der Erfindung zeigt Fig. 4. Diese ist ähnlich der Ausführungsform nach Fig. 3, wobei jedoch die Rohbohrung 15 in der Hartmetallplatte 1 mit einer Hinterschneidung innerhalb ihres axialen Verlaufs in Form einer Innenringnut 16 versehen ist. Die Rohbohrung 15 mit der Hinterschneidung 16 wird wiederum mit Kunstharz ausgegossen, das aufgrund der Hinterschneidung 16 dann absolut fest in der Rohbohrung 15 verankert ist. In das Kunstharz 30 wird dann wiederum die Präzisionsbohrung 2 eingebracht.

## Patentansprüche

1. Hartmetallplatte (1) mit mindestens einer darin gebildeten Präzisionsbohrung (2), dadurch gekennzeichnet, daß in die Hartmetallplatte eine Stufenbohrung (11) eingebracht ist, deren im Durchmesser größerer Abschnitt (11a) sich durch einen wesentlichen Teil der Hartmetallplattendicke hindurch erstreckt und deren im Durchmesser kleinerer Abschnitt (11b) einen größeren Durchmesser als die Präzisionsbohrung (2) hat, und daß in den im Durchmesser größeren Abschnitt (11a) der Stufenbohrung (11) ein auf dem Absatz der Stufenbohrung aufliegendes Plättchen (21) aus bohrbarem Fremdmaterial eingesetzt ist, in welches die Präzisionsbohrung innerhalb der Kontur des im Durchmesser kleineren Abschnitts (11b) der Stufenbohrung eingebracht ist.

2. Hartmetallplatte nach Anspruch 1, dadurch gekennzeichnet, daß das in die Stufenbohrung eingesetzte Plättchen (21) aus einem bohrbarem Metall besteht.

3. Hartmetallplatte nach Anspruch 1, dadurch gekennzeichnet, daß das in die Stufenbohrung (11) eingesetzte Plättchen (21) aus einem Kunststoff oder einem kunstsoffgebundenen Kompositwerkstoff besteht.

4. Hartmetallplatte nach einem der Ansprüche 1 bis 3, dadurch gekennzeichnet, daß das Plättchen (21) in die Stufenbohrung (11) eingeklebt ist.

5. Hartmetallplatte nach Anspruch 2, dadurch gekennzeichnet, daß das Plättchen (2) in die Stufenbohrung (11) eingelötet, eingeschweißt oder auf andere Weise metallurgisch mit dem Hartmetallplatte verbunden ist.

6. Hartmetallplatte (1) mit mindestens einer darin gebildeten Präzisionsbohrung (2), dadurch gekennzeichnet, daß in die Hartmetallplatte eine Rohbohrung (15) eingebracht ist, die im Durchmesser größer als die Präzisionsbohrung (2) ist, und daß in die Rohbohrung (15) ein Kunstharzkörper (30) eingebracht ist, in welchen die Präzisionsbohrung (2) eingebohrt ist.

7. Hartmetallplatte nach Anspruch 6, dadurch gekennzeichnet, daß der Kunstharzkörper (30) in die Rohbohrung (15) eingegossen ist.

8. Hartmetallplatte nach Anspruch 7, dadurch gekennzeichnet, daß die Rohbohrung (15) in ihrem axialen Verlauf innerhalb der Hartmetallplatte mit einer eingefräßten oder anderweitig eingeformten Hinterschneidung (16) in Form einer Ringnut oder dgl. versehen ist.

9. Hartmetallplatte nach Anspruch 6, dadurch gekennzeichnet, daß der Kunstharzkörper (30) in die Rohbohrung (15) der Hartmetallplatte eingepreßt ist.

10. Verfahren zum Herstellen einer Hartmetallplatte (1) nach einem der Ansprüche 1 bis 5, dadurch gekennzeichnet, daß im Zuge der Herstellung der Hartmetallplatte die Stufenbohrung (11) in den Sinterrohling eingepreßt oder in vorgesintertem Zustand eingebohrt wird, daß sodann nach Fertigstellen der eigentlichen Hartmetallplatte das Plättchen (21) in den im Durchmesser größeren Abschnitt (11a) der Stufenbohrung (11) eingesetzt und darin befestigt wird, und daß dann die Präszisionsbohrung (2) in das Plättchen (21) eingebohrt wird.
